Europäisches Patentamt

European Patent Office

Office européen des brevets

(19)

(11) Veröffentlichungsnummer: **0 193 751**
**B1**

(12) **EUROPÄISCHE PATENTSCHRIFT**

(45) Veröffentlichungstag der Patentschrift: **25.04.90**

(51) Int. Cl.⁵: **C 04 B 35/10**, C 04 B 35/48, B 22 D 41/08

(21) Anmeldenummer: **86101647.5**

(22) Anmeldetag: **08.02.86**

(54) **Verwendung von zementfreien Vibriermassen auf Basis von Aluminiumoxid und/oder Zirkoniumdioxid zur Herstellung von Verschleissteilen.**

(30) Priorität: **06.03.85 DE 3507876**

(43) Veröffentlichungstag der Anmeldung:
**10.09.86 Patentblatt 86/37**

(45) Bekanntmachung des Hinweises auf die Patenterteilung:
**25.04.90 Patentblatt 90/17**

(84) Benannte Vertragsstaaten:
**AT BE FR GB IT LU NL SE**

(56) Entgegenhaltungen:
**EP-A-0 004 509**
**DE-A-2 605 906**
**DE-A-2 624 299**
**US-A-4 108 675**

(73) Patentinhaber: **DIDIER-WERKE AG**
**Lessingstrasse 16-18**
**D-6200 Wiesbaden (DE)**

(72) Erfinder: **Boess, Harald**
**Fröschpfortstrasse 2**
**D-543 Montabaur (DE)**
Erfinder: **Gelsdorf, Günter, Dr.**
**Horchheimerstrasse 2**
**D-6200 Wiesbaden (DE)**

(74) Vertreter: **Brückner, Raimund, Dipl.-Ing.**
**c/o Didier-Werke AG Lessingstrasse 16-18**
**D-6200 Wiesbaden (DE)**

Courier Press, Leamington Spa, England.

# EP 0 193 751 B1

## Beschreibung

Die Erfindung bezieht sich auf eine Verwendung von zementfreien Vibriermassen auf Basis von Aluminiumoxid und/oder Zirkoniumdioxid zur Herstellung von mit flüssigen Metallen, insbesondere Stahlschmelzen, in Berührung kommenden Verschleißteilen in Schieberverschlüssen, z.B. insbesondere Verschlußplatten, aber auch in solche Verschlußplatten einzusetzende, auswechselbare Hülsen. Solche Schieberverschlüsse werden bei Metallschmelzen, insbesondere Stahlschmelzen, enthaltenden Behältern eingesetzt.

Verschleißteile sind im allgemeinen Teile, die nach Erreichen einer Verschleißgrenze erneuert bzw. ausgetauscht werden müssen, um die Sicherheit der mit ihnen betriebenen Aggregate nicht zu gefährden. Sie sind meist hohen thermischen, chemischen und gegebenenfalls erosiven Angriffen ausgesetzt und müssen in manchen Fällen darüberhinaus noch erheblichen Festigkeitsbeanspruchungen standhalten. So ist es beispielsweise bei Verschlußplatten für Schieberverschlüsse an Metallschmelze enthaltenden Behältern Voraussetzung, daß die Schieberplatten trotz Formveränderungen, denen das feuerfeste Plattenmaterial durch unvermeidbare Temperaturunterschiede ausgesetzt ist, bei zuverlässiger Abdichtung einwandfrei beweglich bleiben und das Plattenpaar eines solchen Schieberverschlusses im Hinblick auf die thermischen, chemischen und erosiven Angriffe der durchfließenden Schmelze bei regelbarem Gießstrahlquerschnitt wenigstens eine Behälterentleerung durchsteht.

Für solche und ähnliche Beanspruchungen werden bisher Verschleißteile aus hochwertigen trockenen oder halbtrockenen feuerfesten Stoffzusammensetzungen in relativ aufwendigen Stampf-, Rüttel- und Preßverfahren mit mehr oder weniger kostspieliger Nachbehandlung hergestellt. Verschleißteile mit paßgerechter Ausbildung bedürfen nach Ablauf von bezüglich Temperatur und Zeitdauer präzise einzuhaltender Wärmebehandlungsverfahren zusätzlich einer sorgfältigen spanabhebenden Verformung. Beispielsweise sind an Platten von Schieberverschlüssen die Flächen, die mit anderen Flächen bei leichter Verstellmöglichkeit dichtend zusammenwirken sollen, eben zu schleifen. Aber auch Bohrungen, Nuten oder dergleichen werden häufig durch spanabhebende Verformung vorgesehen, so daß vornehmlich paßgerechte, eine mechanische Bearbeitung erfordernde Verschleißteile erhebliche Produktionskosten verursachen. Aus der DE—AS 26 24 299 ist die Verwendung von Verschleißteilen für Schieberverschlüsse bekannt, welche diesen Anforderungen weitgehend Rechnung tragen. Hierbei handelt es sich jedoch um Verschleißteile, welche aus hydraulisch abbindenden, hochtonerdehaltigen, feuerfesten Feuerbetonen hergestellt wurden. Weiterhin ist aus der europäischen Patentschrift 0 015 638 ein Verfahren zur Herstellung von solchen Schieberverschlüssen bekannt, bei welchem MgO als feuerfestes Basismaterial verwendet wird, das mittels einem Polyphosphat und Borsäure gebunden wird. Bei diesem vorbekannten Verfahren erfolgt die Formung der Verschleißteile ebenfalls durch Vibration. Die Verwendung von feinteiliger oder kolloidaler Kieselsäure als Bindemittel in einem feuerfesten Material auf Basis von Aluminiumoxid, allerdings unter Verwendung eines weiteren Bindemittelmaterials in Form von Ton, ist aus der DE—OS 27 39 767 bekannt. Hierbei hendelt es sich jedoch um ein umgeformtes, ungebranntes feuerfestes Material, welches zur Verwendung in feuerfesten Blockkonstruktionen Verwendung findet und zum Abbinden eine Säure neben relativ großen Mengen an Wasser enthält.

Aufgabe der vorliegenden Erfindung ist die Bereitstellung von Verschleißteilen für Schieberverschlüsse mit hoher Festigkeit und ausgezeichneten Heißeigenschaften, welche einfach herzustellen sind und bei ihrer Verwendung bessere Eigenschaften als vorbekannte Verschleißteile aufweisen.

Diese Aufgabe wird erfindungsgemäß gelöst durch die Verwendung von zementfreien Vibriermassen auf Basis von Aluminiumoxid und/oder Zirkoniumdioxid, gegebenenfalls unter Mitverwendung von bis zu 10 Gew.-% Chromoxid, Siliziumkarbid und/oder Kohlenstoffträgern, sowie mit einem Gehalt von 2 bis 8 Gew.-%, bezogen auf die übrigen Festbestandteile, an amorpher, feinteiliger oder kolloidaler Kieselsäure als Bindemittel, welche nach dem Formen und Trocknen bei Temperaturen von 300 bis 1000°C getempert bzw. gebrannt worden sind, zur Herstellung von mit flüssigen Metallen, insbesondere Stahlschmelzen, in Berührung kommenden Verschleißteilen in Schieberverschlüssen.

Durch die Verwendung der erfindungsgemäßen, zementfreien Vibriermassen wird das Festigkeitsminimum im Bereich von 1000°C vermieden, welches durch die hydraulische Bindung bei aus hydraulisch abbindenden Feuerbetonen hergestellten Verschleißteilen auftritt. Außerdem weisen die erfindungsgemäß verwendeten Verschleißteile eine höhere Thermoelastizität auf, d.h. bei dem Vorbrand tritt keine Rißbildung auf, ebensowenig bei der späteren Beanspruchung bei ihrer Anwendung. Außerdem ist bei den erfindungsgemäß verwendeten Verschleißteilen auch der Einsatz von Chromoxid ($Cr_2O_3$) möglich, ohne daß die Umwelt vergiftendes Calciumchromat gebildet wird.

Bei der erfindungsgemäßen Verwendung der zementfreien Vibriermassen können diese ebenso wie ein Beton in eine Form gegossen werden und passen sich den Formflächen genau an, so daß durch glatte und saubere Flächen der Form auch glatte und saubere Gegenflächen am hergestellten Formkörper erzielt werden. Folglich ist es möglich, die Gleitflächen von Schieberplatten mit großer Genauigkeit schon während der Formung der Platten zu erreichen, so daß langwierige mechanische Nacharbeiten fortfallen. Ebenso können die Durchflußöffnungen oder besondere Teile direkt eingeformt und so die Platten in fertigem Zustand der Form entnommen werden.

Zur Herstellung der erfindungsgemäß verwendeten, zementfreien Vibriermassen werden als feuerfester Hauptbestandteil Aluminiumoxid und/oder Zirkoniumdioxid verwendet. Als Aluminiumoxid kann

2

Korund oder Tonerde, entweder in Form von Tabulartonerde oder in Form von calcinierter Tonerde verwendet werden. Korund wird üblicherweise als Schmelzkorund verwendet. Des Aluminiumoxid, Zirkoniumdioxid oder Mischungen hieraus werden im üblichen Kornbereich eingesetzt, z.B. als Materialien mit einer maximalen Korngröße von 6 mm. Ein üblicher Kornaufbau dieser feuerfesten Hauptbestandteile oder deren Mischung ist beispielsweise:

| Korngröße | Gew.-Teile |
|---|---|
| 3,15—6 mm | 15—25 |
| 1—3,15 mm | 18—30 |
| 0,5—1 mm | 5—10 |
| 0,09—0,5 mm | 7—16 |
| <0,09 mm | 15—25 |

Als Gegebenenfalls-Zusatze können die zementfreien Vibriermassen bis zu 10 Gew.-%, bezogen auf die Festbestandteile, an Chromoxid, Siliziumcarbid und/oder Kohlenstoffträgern enthalten. Chromoxid wird üblicherweise als feinteiliges Material mit einer Korngröße unter 0,09 mm eingesetzt. Siliziumkarbid kann als feinteiliges Material, d.h. Mehl oder auch als grobkörniges Material mit Korngrößen von z.B. bis 3,15 mm Verwendung finden. Vorzugsweise werden jedoch Siliziumkarbidflugstäube aus der Siliziumkarbidaufbereitung verwendet. Als Kohlenstoffträger können die zementfreien Vibriermassen Graphit, amorphen Kohlenstoff, Teerpech, Harze sowie deren Mischungen enthalten.

Als Bindemittel enthalten die erfindungsgemäß verwendeten Vibriermassen 2 bis 8 Gew.-%, bezogen auf die übrigen Festbestandteile, an amorpher, feinteiliger oder kolloidaler Kieselsäure. Solche Kieselsäuren sind handelsübliche Produkte, insbesondere werden bei den erfindungsgemäß verwendeten Vibriermassen jedoch kolloidale Kieselsäuren eingesetzt, wie sie als Nebenprodukt bei der Herstellung von Ferrosilizium in großen Mengen anfallen. Diese kolloidalen Kieselsäuren, auch pyrogene Kieselsäuren genannt, besitzen üblicherweise maximale Korngrößen von 0,5 µm.

Gemäß einer besonders bevorzugten Ausführungsform enthalten die erfindungsgemäß verwendeten Vibriermassen noch faserartige Materialien in Mengen von 0,2 bis 5 Gew.-%, bezogen auf die anderen Festbestandteile. Hierbei kann es sich um keramische Fasern, insbesondere Fasern mit einer hohvn Anwendungsgrenztemperatur, d.h. Aluminiumsilikatfasern mit hohen $Al_2O_3$-Gehalten, um Stahlfasern oder auch um Kohlenstoffasern bzw. Kohlefasern handeln.

Durch Zugabe solcher Fasern, die einzeln oder in Mischung zugesetzt werden können, wird die Festigkeit und insbesondere die Beständigkeit gegenüber Rißbildung bei den Verschleißteilen erhöht.

Die erfindungsgemäß verwendeten Vibriermassen werden in an sich bekannter Weise zu Formteilen verarbeitet. Hierzu werden die Ausgangsbestandteile in einem Mischer gründlich miteinander vermischt und mit der erforderlichen Menge an Anmachwasser, üblicherweise 3 bis 8 l Wasser pro 100 kg der Festbestandteile, vermischt. Diese angemachte Vibriermasse wird dann in eine—üblicherweise verlorene—Metallform eingefüllt und auf einem Vibriertisch gut eingerüttelt, wobei dieses Einrütteln mit oder ohne Auflast, z.B. durch Anlegen eines Stempels, erfolgen kann. Anschließend werden die Formteile getrocknet und dann bei Temperaturen von 300 bis 1000°C getempert bzw. gebrannt. Hierdurch wird eine überaus feste Bindung erzielt. Bevorzugt werden die getrockneten Formlinge bei Temperaturen von 600 bis 800°C getempert bzw. gebrannt.

Gemäß einer weiteren bevorzugten Ausführungsform werden die getemperten bzw. gebrannten Formteile noch mit Teer getränkt und dann einer Verkrackungsbehandlung unterzogen. Das Tränken mit Teer erfolgt in an sich bekannter Weise, die Verkrackungstemperatur liegt üblicherweise im Bereich von 350 bis 600°C.

Bei der Herstellung der erfindungsgemäß verwendeten Vibriermassen kann es vorteilhaft sein, geringe Mengen üblicher Verflüssiger, z.B. in Menge von 0,02 bis 0,5 Gew.-%, bezogen auf die anderen Festbestandteile, zuzusetzen. Solche Verflüssiger können beispielsweise übliche Polyelektrolyte wie Polyphosphate sein.

Die Erfindung wird anhand der folgenden Beispiele naher erläutert.

Beispiel 1

94 Gew.-Teile Tabulartonerde mit einer maximalen Korngröße von 6 mm, 2 Gew.-Teile calcinierte Tonerde mit einer maximalen Korngröße von 0,09 mm und 4 Gew.-Teile handelsübliche, amorphe Kieselsäure mit einer maximalen Korngröße von 0,5 µm wurden in einem Mischer gründlich miteinander vermischt. Dann wurden 0,05 Gew.-Teile eines handelsüblichen Polyphosphatverflüssigers (Warenbezeichnung Gießfix C 30) sowie 4 l Wasser auf jeweils 100 kg der Festbestandteile zugesetzt und gründlich eingemischt, ferner waren dem Ausgangsgemisch 1 Gew.-Teil Graphit zugesetzt worden.

Aus dieser Masse wurde in einer verlorenen Metallform eine Platte für einen Schiebeverschluß mit Abmessungen von 400 mm Höhe×250 mm Breite×40 mm Dicke hergestellt, wobei die Masse auf einem Vibriertisch während 15 Minuten in der Form eingerüttelt wurde. Nach dem Trocknen für 12 Stunden bei 120°C wurde während 5 Stunden bei 800°C getempert bzw. gebrannt.

3

In der folgenden Tabelle sind die Ergebnisse von Testuntersuchungen an der so hergestellten Schiebeplatte zusammengestellt.

Beispiel 2

Die Arbeitsweise von Beispiel 1 wurde wiederholt, wobei jedoch 92 Gew.-Teile Tabulartonerde, 2 Gew.-Teile calcinierte Tonerde und 6 Gew.-Teile pyrogene Kieselsäure verwendet wurden. Der Anmachwasserbedarf lag bei 4,2 l Wasser pro 100 kg der Festbestandteile. Als weiterer Bestandteil enthielt das Ausgangsgemisch 1 Gew.-Teil Teerpech. Die Testergebnisse der so hergestellten Schiebeplatte sind ebenfalls in der folgenden Tabelle zusammengestellt.

Beispiele 3 bis 7 ·

Die Arbeitsweise von Beispiel 1 wurde wiederholt, wobei die in der Tabelle angegebenen Ausgangsmaterialien verwedet wurden.

Die Testergebnisse der so hergestellten Schiebeplatte sind ebenfalls in der Tabelle aufgeführt.

Aus den Massen der Beispiele 5 und 6 wurden außer Schiebeplatten auch auswechselbare Hülsen für Verschlußplatten mit den folgenden Abmessungen: Innendurchmesser=45 mm, Außendurchmesser=85 mm, und Länge=200 mm, hergestellt. Auch diese Hülsen besaßen ausgezeichnete Verschleißeigenschaften.

Hinweise über die Verwendbarkeit einer Masse zur Herstellung von Verschleißteilen, insbesondere für das Plattenpaar von Schieberverschlüssen, gibt der Peelingtest. Dieser wird unter folgenden Bedingungen ausgeführt:

Ein Plattenstück 100×100 mm mit glatter Fläche wird auf einer Zone von ca. 30 mm Durchmesser mittels eines autogenen, zum Durchbrennen von 20 bis 30 mm starken Blechen geeigneten Schweißbrenners erhitzt. Der Sauerstoffdruck beträgt dabei etwa $3,5 \times 10^5$ Pa. Der Abstand der Düse des durch ein Stativ festgehaltenen Brenners zur Platte beträgt 50 mm und die Versuchszeit 15 Sekunden. Erfolgt kein Absplittern, dann eignet sich das Material sehr gut zum Herstellen von Plattenpaaren für Schieberverschlüsse. Das Material ist brauchbar, wenn sich bei nachträglichem Kratzen am Prüfkörper Partikel ablösen, abert unbrauchbar, sobald Absplitterungen während des Testes erfolgen.

TABELLE

| | | Beispiel | | | | | | |
|---|---|---|---|---|---|---|---|---|
| | | 1 | 2 | 3 | 4 | 5 | 6 | 7 |
| Aluminiumoxid: | | | | | | | | |
| Tabulartonerde | (Gew.-Teile) | 94 | 92 | 90 | 87 | 46 | 68 | 87 |
| calc. Tonerde | (Gew.-Teile) | 2 | 2 | 2 | 2 | — | — | 2 |
| Zirkoniumdioxid | (Gew.-Teile) | — | — | — | — | 50 | 30 | — |
| Chromoxid ($Cr_2O_3$) <0,09 mm | (Gew.-Teile) | — | — | 4 | — | — | — | — |
| Siliziumkarbid (SiC) <0,02 mm | (Gew.-Teile) | — | — | — | 5 | — | — | 2 |
| Kohlenstoffträger: | | | | | | | | |
| Graphit | (Gew.-Teile) | 1 | — | — | — | — | — | 2 |
| Teerpech | (Gew.-Teile) | — | 1 | — | — | — | — | 1 |
| Kieselsäure (amorph) <0,5 μm | (Gew.-Teile) | 4 | 6 | 4 | 6 | 4 | 2 | 6 |
| Anmachwasser (1/100 kg) | | 4,0 | 4,2 | 3,9 | 4,2 | 4,0 | 4,1 | 4,4 |
| Temper- bzw. Brenntemp. (°C) | | 800 | 800 | 800 | 800 | 800 | 800 | 800 |
| Heißbiegefestigkeit 1400°C (N/mm²) | | 9,5 | 12,4 | 15,7 | 12,5 | 15,2 | 12,2 | 10,8 |
| Druckerweichen bei 0,2 N/mm² Auflast (DIN 51 053, Bl. I) | | | | | | | | |
| nach Vorbrand 5 h bei 150°C $D_{max}$ (%) | | 1,10 | 1,15 | — | — | — | — | — |
| Z (%) bei 1700°C | | −0,27 | −0,07 | — | — | — | — | — |
| Peelingtest (nach Tempern bei 300°C) | | <——————ausgezeichnet——————> | | | | | | |

Patentansprüche

1. Verwendung von zementfreien Vibriermassen auf Basis von Aluminiumoxid und/oder Zirkoniumdioxid, gegebenenfalls unter Mitverwendung von bis zu 10 Gew.-% Chromoxid (Cr₂O₃), Siliziumkarbid (SiC) und/oder Kohlenstoffträgern, sowie mit einem Gehalt von 2 bis 8 Gew.-%, bezogen auf die übrigen Festbestandteile, an amorpher, feinteiliger oder kolloidaler Kieselsäure als Bindemittel, welche nach dem Formen und Trocknen bei Temperaturen von 300 bis 1000°C getempert bzw. gebrannt worden sind, zur Herstellung von mit flüssigen Metallen, insbesondere Stahlschmelzen, in Berührung kommenden Verschleißteilen in Schieberverschlüssen.

2. Verwendung nach Anspruch 1, dadurch gekennzeichnet, daß die Vibriermassen bei Temperaturen von 600 bis 800°C getempert bzw. gebrannt worden sind.

3. Verwendung nach Anspruch 1 oder 2, dadurch gekennzeichnet, daß den Vibriermassen bei ihrer Herstellung 0,2 bis 5 Gew.-%, bezogen auf die übrigen Festbestandteile, an keramischen Fasern, Stahlfasern und/oder Kohlenstoffasern zugesetzt worden sind.

4. Verwendung nach einem der vorhergehenden Ansprüche, dadurch gekennzeichnet, daß die getrockneten und getemperten bzw. gebrannten Formteile mit Teer getränkt worden sind und dann einer Verkrackungsbehandlung unterzogen worden sind.

**Revendications**

1. Utilisation de masses à vibrer exemptes de ciment, à base d'oxyde d'aluminium et/ou d'oxyde de zirconium, éventuellement avec utilisation conjointe d'une proportion allant jusqu'à 10% en poids d'oxyde de chrome (Cr₂O₃), de carbure de silicium (SiC) et/ou de supports en carbone, ainsi qu'avec une teneur de 2 à 8% en poids, par rapport au rest des constituants solides, d'une silice amorphe, finement divisée ou colloïdale, comme liant, qui sont, après le formage et le séchage, soumises à un traitement thermique ou une calcination à des températures de 300 à 1000°C, pour la préparation de pièces d'usure pour obturateurs à tirois, destinées à entrer en contact avec des métaux liquides, en particulier de l'acier fondu.

2. Utilisation selon la revendication 1, caractérisée en ce que les masses à vibrer ont été soumises à un traitement thermique ou une calcination à des températures de 600 à 800°C.

3. Utilisation selon la revendication 1 ou 2, caractérisée en ce que les masses à vibrer, lors de leur fabrication, sont additionnées de 0,2 à 5% en poids, par rapport au reste des constituants solides, de fibres céramiques, de fibres d'acier et/ou de fibres de carbone.

4. Utilisation selon l'une quelconque des revendications précédentes, caractérisée en ce que les pièces moulées séchées et ayant subi un traitement thermique ou une calcination, sont imprégnées de goudron, et ensuite, soumises à un traitement de craquage.

**Claims**

1. Use of cement-free vibratable compositions based on aluminium oxide and/or zirconium dioxide, optionally also with the use of up to 10 wt.% chromium oxide (Cr₂O₃), silicon carbide (SiC) and/or carbon carriers, and with a content of 2 to 8 wt.%, with respect to the other solid components, of amorphous, finely divided or colloidal silicas as a bonding agent which after shaping and drying have been fired or tempered at temperatures of 300 to 1000°C, for producing components subject to wear in sliding gate valves which come into contact with liquid metals, particularly steel melts.

2. Use as claimed in Claim 1, characterised in that the vibratable compositions have been tempered or fired at temperatures of 600 to 800°C.

3. Use as claimed in Claim 1 or 2, characterised in that 0.2 to 5 wt.%, with respect to the other solid components, of ceramic fibres, steel fibres and/or carbon fibres have been added to the vibratable compositions in their manufacture.

4. Use as claimed in one of the preceding claims, characterised in that the dried and tempered or fired shaped components have been impregnated with pitch and have then been subjected to a cracking treatment.